# EUROPEAN PATENT APPLICATION

(11) **EP 1 772 735 A2**
(43) Date of publication of application: **11.04.2007**
(21) Application number: 06255124.7
(22) Date of filing: 04.10.2006
(51) Int. Cl.: G01N 33/68, B01L 3/00, B01L 9/00

(54) **Protein microarray slide**

(30) Priority: 04.10.2005 US 723406 P
(71) Applicant: MILLIPORE CORPORATION, Billerica, Massachusetts 01821 (US)
(72) Inventor: Bonhomme, Louis, Waltham, MA 02154 (US); Carelli, Mike, Maynard, MA 01754 (US); Chernokalskaya, Elena, Lexington, MA 02420 (US); McKenzie, Bill, Reading, MA 01867 (US); Goddard, Philip, Nashua, NH 03064 (US); Arif, Bilal, Arlington, MA 02474 (US)
(74) Representative: Gambell, Derek

(57) **Abstract**

The present invention relates to a slide having a first and a second major surface on opposite sides of the slide and one or more openings through the slide from the first major surface to the second major surface and one or more membranes mounted to one major surface of the slide over the one or more openings. The slide provides for both an ability to wash and to reduce the background fluorescence in the active membrane area. Preferably the membrane is made of nitrocellulose, nylon or PVDF. The opening(s) can be used to allow wash solutions to pass through the membrane and be removed along with the contaminants (unattached materials such as proteins or antibodies, dyes, salts, etc) from the slide thereby reducing the fluorescent background. Additionally, the one or more openings exhibit a lower fluorescence than a membrane that is laid over or attached to the slide, as neither the slide material or any adhesive is present which would otherwise increase the background fluorescence.

## Description

### Cross Reference Related Applications

The present utility patent application claims the benefit of U.S. Provisional Patent Application No.: 60/723,406, filed on October 4, 2005. The entire contents of which are incorporated herewith in entirety.

The present invention relates to a protein microarray slide. More particularly it relates to a protein microarray slide having a membrane supported on the slide and one or more openings in a portion of the slide below the membrane.

### Background of the Invention

The use of membrane based microarrays is well-known.

One such well-known array is formed of a nitrocellulose membrane material either adhered or cast onto a glass microscope slide.

The use of a PVDF membrane adhered on a slide is also well known, see US 6,197,599 and WO 03/072752. Several different embodiments are known including the use of a fluorescent reduced slide such as a carbon filled or coated plastic slide to reduce background noise.

The issues with these devices are many.

They have high background fluorescence making it difficult to distinguish the fluoresced protein molecule from the substrate. The background fluorescence or"noisd'can arise from any or all of the membrane itself; the various reagents such as dyes, used in the attachment, purification and other process steps for the protein in question; the adhesive, if used to attach the membrane to the slide; or the slide material itself.

Cast in place membrane materials tend to be inconsistent in their thickness and the pore size distribution, which often show up as streaks or other images on the membrane surface when viewed under fluorescent detecting conditions. These inconsistencies create variations in the fluorescent image that are used to characterize proteins, which limit the ability to detect fluorescent and differentiate fluorescent signals.

They also are difficult to wash (generally to remove unbound dyes and other such materials) thereby keeping the noise level high as well as sometimes inhibiting the subsequent steps of a multi-step process. Protein samples need to: a) be adequately spotted and bound to a target surface, b) remain structurally viable while attached to the surface without denaturing, c) be adequately washed of undesirable waste material while attached to the surface, and d) be sufficiently dried on the surface. The sample and surface are then exposed to controlled wavelengths of ultra-violet light to induce fluorescence at higher wavelengths of light, which are recorded by a suitable instrument.

The quality of the recorded information is determined by the intensity of the fluorescent signal, as measured by average signal and signal-to-noise ratio, and the consistency of replicated signals at various locations across the entire target surface.

What is needed is a membrane slide that overcomes these issues with the existing slide format, which is typically 25mm x 75mmx 1mm. The present invention provides such a solution.

### Summary of the Invention

The present invention relates to a slide having: a) a first and a second major surface on opposite sides of the slide, b) one or more openings through the slide from the first major surface to the second major surface, and c) one or more membranes mounted to one major surface of the slide over the one or more openings. The slide provides for both an ability to wash and to reduce the background fluorescence in the active membrane area. Preferably the membrane is made of nitrocellulose, nylon or PVDF, more preferably PVDF. The opening(s) can be used to allow wash solutions to pass through the membrane and be removed along with the contaminants (unattached materials such as proteins or antibodies, dyes, salts, etc) from the slide thereby reducing the fluorescent background. Additionally, the one or more openings exhibit a lower fluorescence than a membrane that is laid over or attached to the slide, as neither the slide material or any adhesive is present which would otherwise increase the background fluorescence.

In a preferred embodiment, an asymmetrical membrane structure is used (a membrane with a gradient of pore sizes from one surface to the other such that the pores on one surface are larger than those on the other surface) where the more open side is facing away from the slide surface. A lower background fluorescence is found with this embodiment.

A second embodiment consists of stratified carbon filled membrane attached to a slide. Carbon powder, dyes or pigments are cast into or impregnated into a membrane in order to reduce the background fluorescence and create a two-layered membrane the first layer being carbon rich and the second layer being resin rich.

A third embodiment consists of a textured and faceted surface on one side of the slide surface, to which the membrane is attached. A three-dimensional-texture surface absorbs more UV light, internally refracts more UV light, and externally reflects UV light and fluorescent light in a diffused manner. Overall this textured surface reduces the amount of fluorescent light that reaches the CCD or equivalent imaging sensor, which improves background-fluorescence performance. The surface could also feature flat facets that preferentially direct fluorescent frequencies of light away from the CCD sensors that are used for image capture. The angle of incidence between the axis of the fluorescent light and the facets preferably should be between 45 degrees and 89 degrees.

In a fourth embodiment, a slide-mask holder for the slide is taught as a means for reducing and eliminating background fluorescence generated by the slide material. It may include a top cover and a bottom cover, preferably held together by a hinge, more preferably by a living hinge. At least the top cover and preferably the top cover and bottom cover have an opening substantially equal in size and configuration to the membrane mounted to the slide.

A fifth embodiment has a slide and/or cover made of a low fluorescent material or has a fluorescent blocking or absorbing material added to it or applied to its surfaces as a coating. Preferably the material is selected from the group consisting of carbon, charcoal, activated carbon and graphite.

A sixth embodiment a neoprene slide material or a neoprene-coated slide that has membrane already attached to it. The neoprene or equivalent material covers the top surface of the entire slide except for a window, which exposes the membrane. The size of the window may be 20mm x 50mm, but could be larger or smaller. The neoprene or equivalent material can be a preformed piece or a coating and is attached to the slide by mechanical means such as clamps, adhesive means such as double sided adhesive tape or glues or it can be solvent bonded to the slide surface when in a pre-formed piece. It can be applied as a coating using such well-known techniques as pad stamping, spraying and the like. The neoprene or its equivalent piece or coating reduces background fluorescence from the membrane edge, the slide material and the adhesives or other materials used to attach the membrane to the slide.

A seventh embodiment consists of a slide that is mechanically attached to or formed in a CD-type disk. One embodiment consists of placing a standard slide into a suitably-configured-CD disk. The slides would snap into place and be fixed to the CD during application of antibody reagents, blocking, and washing. The application of fluid reagents would be done using a spin-coating process.

An eighth embodiment consists of injection molding a CD that has breakaway features that enable slides to be easily extracted for analysis and storage in a customer's traditional format.

An accessory product for the device of the seventh or eight embodiments could include the integration of an aerosolization (nebulizer) system into a CD-drive chassis that includes UV excitation and fluorescent detection. These are all off-the shelf technologies that can be pre-positioned and integrated into an automated wash and imaging system.

A ninth embodiment consists of an open-bottom slide having the center, open portion of the slide is temporarily filled with a secondary material that supports the suspended membrane from below during spotting operations. This secondary material would be fixed in place initially, and during pre-wash and spotting operations. The secondary material is removed after spotting and prior to washing operations. This secondary material can be die-cut or injection molded from the same material as the slide, or it can be made from a different material that has low extractable qualities when immersed in aqueous solutions and methanol-type solvents. The secondary material can be a polymer, glass, ceramic or metal. In one embodiment it is formed of ferro-magnetic materials, or polymers that contain ferro-magnetic particles and uses magnetism to attach itself to the slide.

A further embodiment is to form drains in a solid slide, adjacent to or in the corners or other edges of the membrane to allow for excess liquid to drain from the slide surface.

It is an object of the present invention to provide a protein microarray slide comprising a slide having a first and a second major surface and the slide having one or more openings therethrough from the first major surface to the second major surface and a membrane attached to a major surface of the slide selected from the group consisting of the first major surface and the second major surface over the one or more openings.

It is another object to provide a protein microarray slide comprising a slide having a first and a second major surface and the slide having one or more openings therethrough from the first major surface to the second major surface and a membrane attached to a major surface of the slide selected from the group consisting of the first major surface and the second major surface over the one or more openings and wherein the slide is made of glass or plastic.

It is a further object to provide an asymmetrical membrane wherein the more open pored side is arranged upward away from the surface of the slide to which the membrane is attached.

It is an object to provide a protein microarray slide comprising a slide having a first and a second major surface and the slide having one or more openings therethrough from the first major surface to the second major surface and a membrane attached to a major surface of the slide selected from the group consisting of the first major surface and the second major surface wherein the slide is made of plastic and the slide either contains one or more fillers of fluorescent blocking or absorbing material or is coated with a layer of one or more fluorescent blocking or absorbing materials.

It is an object to provide a protein microarray slide comprising a slide having a first and a second major surface and the slide having one or more openings therethrough from the first major surface to the second major surface and a membrane attached to a major surface of the slide selected from the group consisting of the first major surface and the second major surface wherein the slide is made of plastic, the slide either contains one or more fillers of fluorescent blocking or absorbing materials or is coated with a layer of one or more fluorescent blocking or absorbing materials and the membrane is an asymmetric membrane with the more open pored side facing upward away from the surface of the slide to which the membrane is attached.

It is an object to provide a holder for a protein microarray slide comprised of a cover, a bottom cover and a hinge between the cover and bottom cover, the cover and bottom cover being of a size and configuration to substantially cover the slide and wherein at least either the cover or bottom cover has one or more openings corresponding to and in register with the one or more openings of the slide.

### In The Drawings

Figure 1 shows a first embodiment of the present invention in top down planar view.
Figure 2 shows a first embodiment of the present invention in cross-sectional view.
Figure 3 shows a top down view of another embodiment the slide support of the present invention in top down planar view.
Figure 4 shows a top down view of further embodiment the slide support of the present invention in top down planar view.
Figure 5 shows a top down view of an additional embodiment the slide support of the present invention in top down planar view.
Figure 6 shows a further embodiment of the present invention in planar side view.
Figure 7 shows a block diagram of a process for making slides according to the present invention.
Figure 8 shows a further embodiment of the present invention in planar view.
Figure 9 shows an additional embodiment of the present invention in top down planar view.
Figure 10 shows a further embodiment of the present invention in cross-sectional view.
Figure 11 shows a holder for a slide according to the present invention in cross-sectional view and open configuration.
Figure 12 shows a holder for a slide according to the present invention in cross-sectional view and closed configuration with a slide according to the present invention in place.
Figure 13 shows a cross sectional view of a further embodiment of the present invention.
Figure 14 shows a planar view of a further embodiment of the present invention.
Figure 15 shows a top down view of a further embodiment of the present invention.
Figure 16 shows a top down view of a further embodiment of the present invention.
Figure 17 shows a top down view of a further embodiment of the present invention.
Figure 18 shows an exploded planar view of a further embodiment of the present invention.
Figure 19 shows a planar view of a further embodiment of the present invention.
Figure 20A shows a top down planar view of a further embodiment of the present invention.
Figure 20B shows a top down planar view of a further embodiment of the present invention.
Figure 21 A shows a top down planar close view of a portion of the membrane structure of Figures 20 A or B of the present invention.
Figure 21 B shows an alternative top down planar close view of a portion of the membrane structure of the present invention.
Figures 22 A-C show SEMs of the embodiment according to Example 1.

### Detailed Specification of the Invention

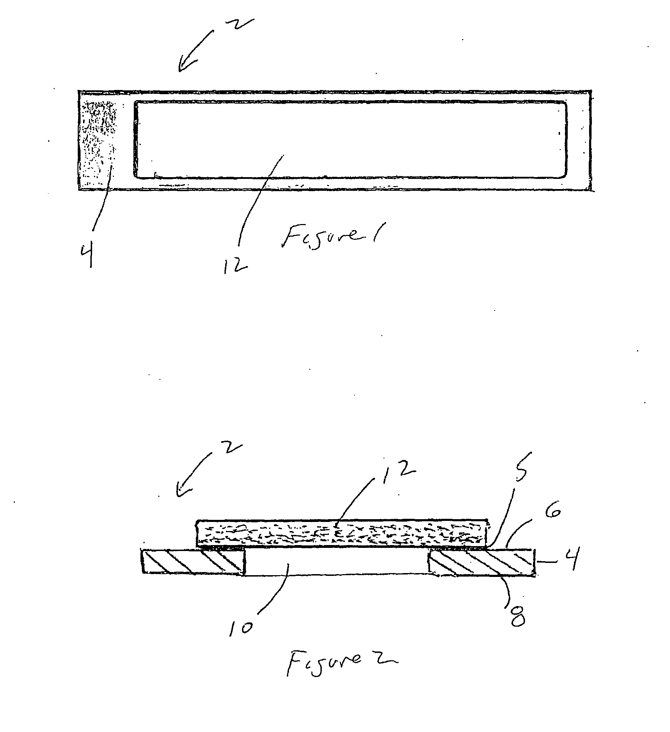

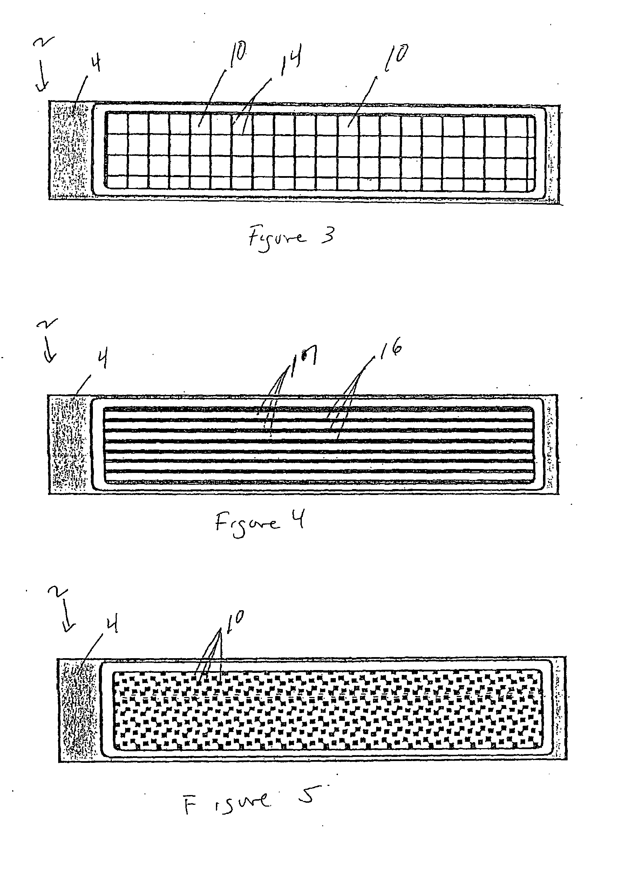

The present invention is a protein array slide 2, as shown in Figures 1 and 2, comprised of a slide substrate 4 having a first major surface 6 and a second major surface 8. The first 6 and second 8 surfaces are arranged to be opposite to each other and in parallel with each other. One or more openings 10 are formed in the slide support 4 from the first surface 6 to the second surface 8. A membrane 12 is attached to either major surface 6 or 8 of the slide support 4.

As shown in Figures 1 and 2 one opening 10 is shown although more than one opening can be used in certain embodiments.

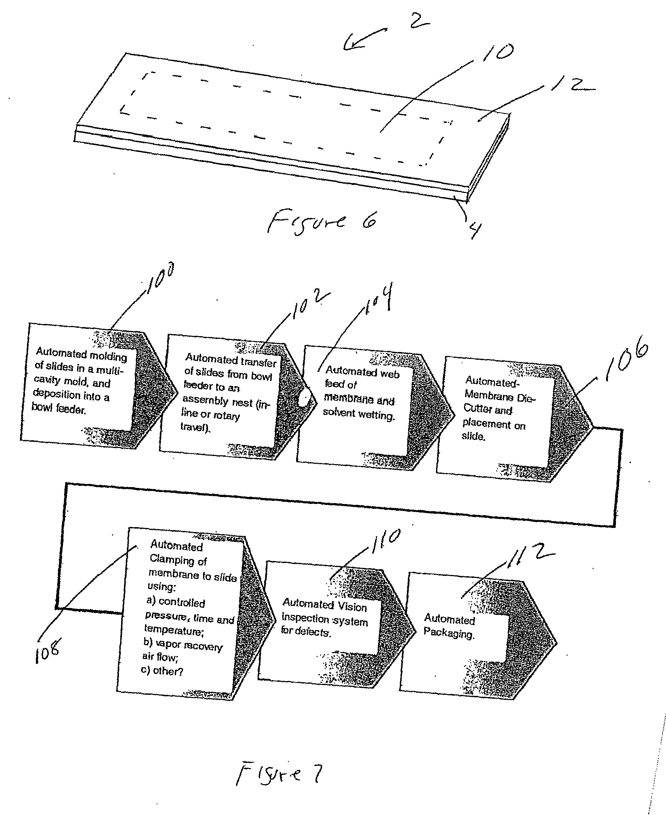

Figure 3 shows a series of openings 10 between a grid-like or screen-like structure 14 of the slide support 4.

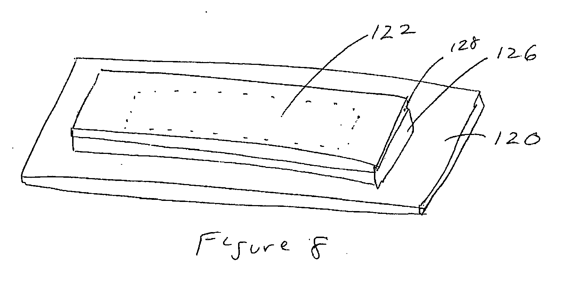

Figure 4 shows an alternative embodiment in which the slide support 4 contains a series of parallel ribs 16 instead of the grid-like structure of Figure 3 which form a series of troughs or lanes 17.

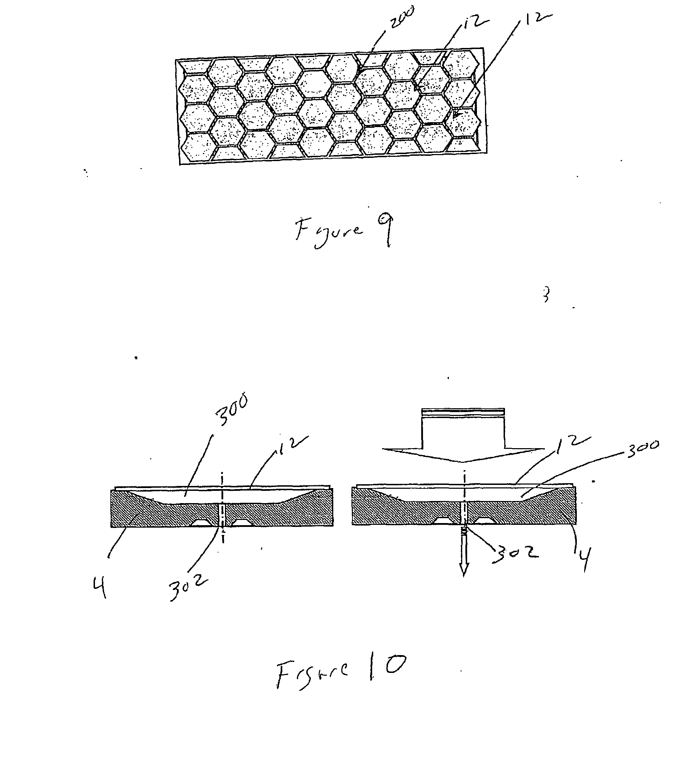

Figure 5 shows a slide support 4 having a series of openings 10. Such openings can be of any conventional shape such as circle or oval, or polygonal shape including but not limited to triangular, square, pentagonal, sex-, sept- or octagonal and the like.

Other configurations may also be used. For example, one could arrange a series of openings equal in number to the number of protein array spots one desires to have. Preferably in such an embodiment, the openings 10 are arranged in rows and columns that are equally spaced apart from each other either by row, by column or by both. In the embodiment of one opening, such as in Figures 1 and 2, the opening preferably is centrally located. Alternatively, it may be offset to one side or end of the support if desired for example to create an area for writing or marking the source of the sample to include an identification tag such as a barcode or RFID tag and the like.

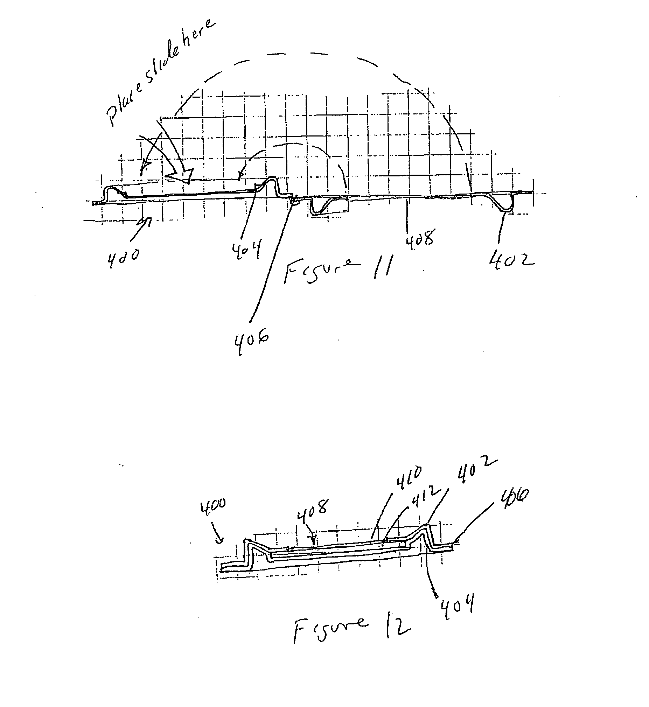

As shown in Figure 1, the membrane 12 is preferably smaller in dimensions than the slide support 4. In this way the membrane is kept inboard of the support edge 16. In this embodiment some area of the slide is visible and therefore may cause noise or background fluorescence if not treated to reduce or eliminate the noise (as described below). It does allow however for easy handling and prevents any edge contamination of the membrane. Alternatively, the membrane 12 can span the full width and length of the slide support 4 as shown in Figure 6. This embodiment allows for the fullest use of the membrane surface and also can in some instances help reduce noise caused by the slide support 4 by its being covered by the membrane 12. While not shown, one could as easily use two or more pieces of membrane 12 if desired.

The slide support can be formed of plastic; glass; metal or ceramic. Preferably it is made of plastic such as polystyrene, polycarbonate, polypropylene, polyethylene, ABS, acrylic resin, nylon, polysulfone and the like. A suitable glass is a borosilicate glass. Metals include but are not limited to aluminum, stainless steel and the like and various ceramics such as silica or silicate based ceramics may be used.

Preferably if the slide support is made of plastic, it either contains one or more agents, such as fillers that help reduce the fluorescent background of the slide support either by blocking or absorbing the fluorescence. Alternatively, it is coated with a material that does the same thing. Likewise, a ceramic support may also incorporate such a material or have such a coating. Glass and metal supports would use a coating. Such materials are weft-known in the industry and include but are not limited to fluorescent blocking or absorbing materials selected from the group consisting of carbon black, charcoal, activated carbon and graphite. These materials, depending on whether it is a coating or impregnated into a porous structure, may contain additional ingredients. For example, with impregnated materials the materials may be carried in a liquid such as water or evaporative materials such as alcohols or other solvents which can then be removed by drying, heat, vacuum, etc. With coatings, a carrier such as an adhesive or paint may be used to hold the blocking or absorbing material in place.

The membrane is made of a material selected from the group consisting of PVDF, nitrocellulose and nylons. Preferably the membrane selected has low inherent fluorescent properties or is treated with a material to reduce its fluorescent properties. Such membranes are commercially available form a variety of sources. A suitable PVDF membrane is a 0.45 micron average pore diameter membrane known as Immobilon™FL membrane available from Millipore Corporation of Billerica, Massachusetts. Typically pore sizes ranging from about 0.80 micron to about 0.40 micron are suitable for this application. A preferred pore size is about 0.45 micron.

Preferably, the membrane is asymmetric in its pore size configuration such that the pore sizes on one side are larger than the pore sizes on the other. Generally a pore size ratio of between 2 :1 to 1000 :1 is suitable for the present invention. In using such an asymmetrical membrane, one arranges the membrane such that the smaller pored side is facing the major surface to which the membrane attached. To say it in another words, the large size pore side of the membrane is facing away from the support surface to which the membrane is attached. It has been found that this reduces the level of noise from the membrane.

The membrane can be attached to the slide support by several different means. One can use a series of clamps, such as "C" clamps to mechanically hold the membrane to the support surface (not shown). Alternatively, adhesives, such as layer 5 in Figure 2, including but not limited to double sided tape, glues, pressure sensitive adhesives and the like can be used to form an attachment between the membrane and the slide support surface.

Heat bonding or solvent bonding may also be used with plastic slide support materials. In some applications, this is a preferred method of attachment as it eliminates any fluorescent noise caused by the adhesive or mechanical devices such as the clamps and reduces the streaking or other images caused by cast-in-place membranes. A preferred solvent is one which solvates both the membrane and the support material so as to create a strong bond between the two. One example is acetone used with a PVDF membrane and a polystyrene slide support material. One can simply apply a small amount of solvent to the desired area(s) of the membrane such as its outer edges, allow the solvent to wick into the membrane and then evaporate and then apply the membrane against the plastic support to cause both to solvate and adhere to each other.

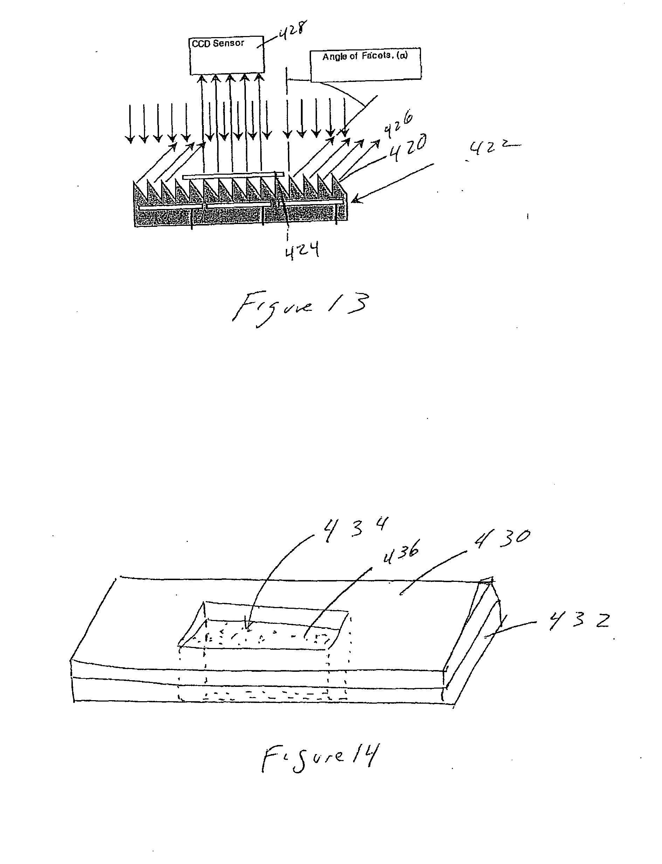

A solvent bonding process that manages solvent handling, vapor recovery, parts handling and packaging is shown in Figure 7. Preferably this is an automated system. Slide supports can be formed in a multicavity mold 100 and then transferred to an automated bowl feeder 102. The feeder orients the slides and then shuttles them to an assembly nest 104. Multiple nests can be attached to a rotary table or if desired a single nest can be used. The nest performs a visual inspection of each slide identifying improperly arrangement or defective slides. Membrane is cut into desirable sized pieces and configurations at the die cutter 106 and are dispensed onto the slides. Preferably, the dispensing process consists of a slightly negatively pressurized bath into which the membrane is run. The membrane is then die cut while wet and placed onto an awaiting slide. Preferably this step is formed of the rotary table and uses a single linear motion actuator to wet, cut and place the membrane in place. The immersion bath would have a small reservoir of solvent (50-100 mls), a wiper blade such as an elastomer blade to remove excess solvent, a slightly negative internal pressure to prevent solvent fume discharge, a vent to a recovery system for the solvent or a scavenger such as carbon or charcoal an a roller for immersing and retracting the membrane from the bath. Preferably, this is an automated system such that immersion only occurs when the machine is in operation. The retraction would occur upon shut down if the machine is stopped for maintenance, repairs, emergency shutdowns, etc.

The membrane is then attached in step 108 using nip rollers, a pneumatic press or a mechanical clamp.

The slide assembly with membrane is then inspected for alignment of the membrane in step 110 and labeled and packaged in step 112.

Another method of forming the device of the present invention is to use a double sided adhesive tape, such as i) Carbon Tape from SPI Supplies, West Chester, PA.; ii) Type 9415 acrylate tape from 3M; or iii) MED 6000 and MED 3044 from Avery Dennison). This tape has its first side attached to the slide over the one or more openings and is applied so that no bubbles of air are trapped between the adhesive tape and the slide. The slide may have been preformed with the one or more openings such as by injection molding or removal of the opening areas such as by laser, or the opening(s) can be formed after the application of the tape such as by using a laser to cut out the one or more openings through the slide and tape material. If the opening(s) were preformed. the adhesive tape over the opening(s) is cut away by knife or laser. The membrane is then attached to the second side of the tape. The membrane and remainder of the tape are then cut to their final dimensions such as by a knife or preferably a laser and the excess tape/membrane is then peeled away from and removed from the slide.

An alternative method is to use a laser absorbant coating and a Yag laser. A coating of laser absorbant material such as ClearWeld™ or equivalent coating is applied to selected portions of the surface of the slide such as its outer edges to which the one or more membrane sections are to be attached. A sheet of membrane is applied to the slide in such a way that no laser absorbent coating material is displaced from its original position. A laser is applied to the slide so as to melt the slide material and allow it to flow into the membrane. After cooling, a cutting laser is used to cut the outer border of the one or more final membrane shapes. The skeleton of the membrane is peeled away to achieve the protein array slide.

In another embodiment, impregnation of the preformed membrane can be achieved by vacuum impregnating small particles of organically or inorganically derived carbon, carbon black or graphite into the interstitial spaces of a 0.45-micron size PVDF membrane either in a dry state or in a liquid state. In some instances a small amount of binder may be mixed in with the particles to retain them in the membrane where physical retention alone is not satisfactory. The particles can be fixed in place by coating the membrane with material such as: a) an ultraviolet-light-cured, acrylate polymer; b) an ultraviolet-light-cured epoxy; or c) solvent bonding a film or slide directly to the carbon-rich side of the membrane.

Another embodiment consists of stratified carbon filled membrane attached to a slide. Carbon powder, dyes or pigments are cast into a PVDF, nylon or nitrocellulose membrane in order to reduce the background fluorescence.

For example, one can add the carbon to one layer of the co-cast membrane to form the carbon rich layer. The protein-binding performance of such a membrane, for example Immobilon™-FL-type membrane is improved by using a co-casting process that creates resin rich 0.45 micron pore size on one side of the membrane, while creating a carbon rich 0.45 micron pore size on the other side of the membrane.

In another embodiment, one can use a composite membrane such as PVDF or nitrocellulose membrane cast on top of preformed membrane support that has carbon either as a filler or which is impregnated into it either during or after its formation or after the formation of the second layer. Laminated membranes may also be used provided they have the requisite porosity required to allow for the washing of the samples.

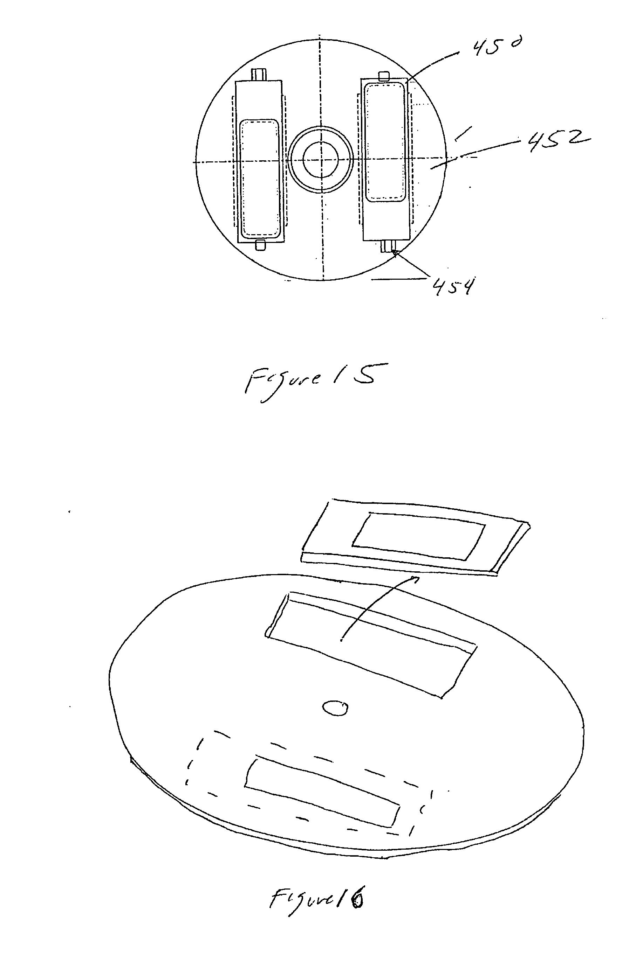

A slide assembly according to this embodiment is shown at Figure 8 in which the slide 120 has in this example a single opening 122 although as discussed above more than one opening can be used. A membrane 124 of this embodiment is shown with the carbon rich layer 126 being adjacent to and bonded to the slide 120 and the other layer 128 faces upward away from the slide 120.

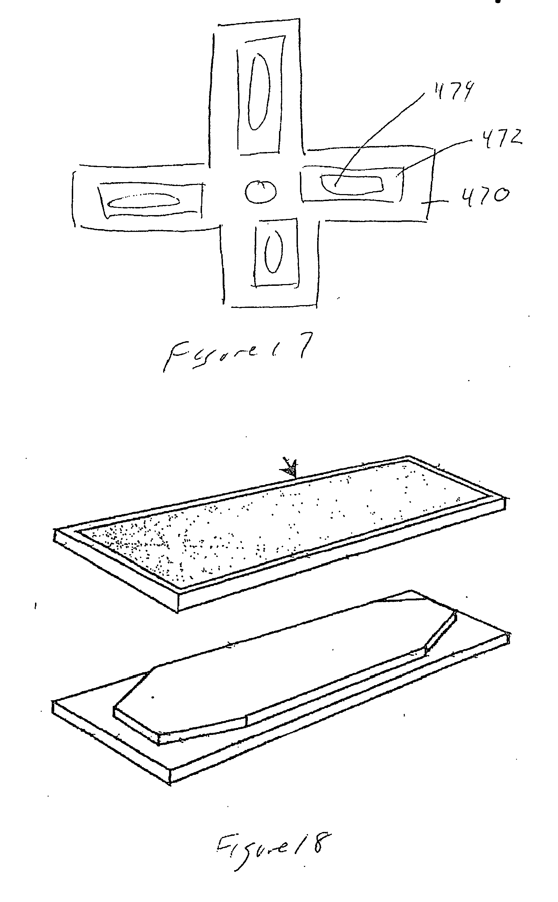

In some embodiments, it is desirable to keep the proteins separated from each other. One method of doing so is to isolate areas of membrane so that one protein cannot migrate to toward another. One such example is shown in Figure 9 in which areas of the membrane 12 are separated from other by barrier areas 200. This can be accomplished in a variety of ways such as by applying a solid material between areas (such as a solid plastic wall or ribs), collapsing the membrane in the barrier areas 200 to render them non-porous through out the thickness, apply a chemical treatment to such barrier areas (hydrophobic or oleophobic edges) or to physically cut the edges of adjoining areas such as by laser or die cutting over a gridded or ribbed slide surface. Alternatively, one could set up a series of grids in the slide to which the areas conform and can be cut.

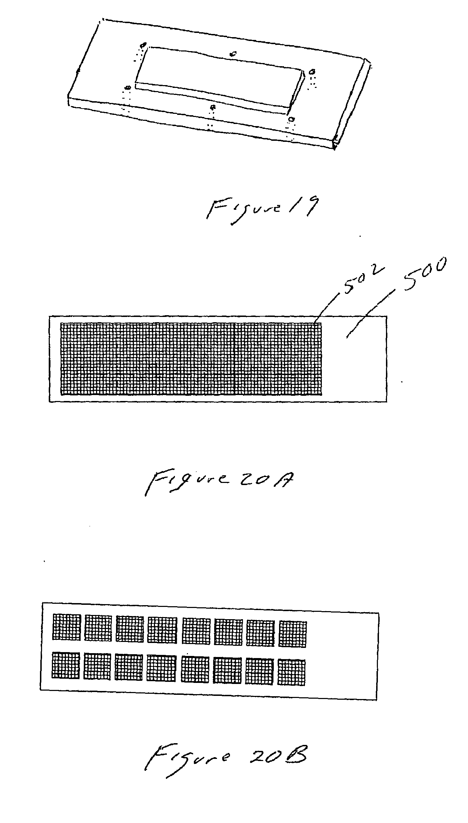

Figure 10 shows another embodiment in which the membrane is sealed to the outer edges of the slide and the slide has a recessed area 300 beneath the membrane and one or more vacuum ports 302 in it. By applying a vacuum through the one or more ports 302, washing fluids and contaminants can be removed from the membrane easily and quickly. The same principle can also be accomplished with other embodiments of the present invention.

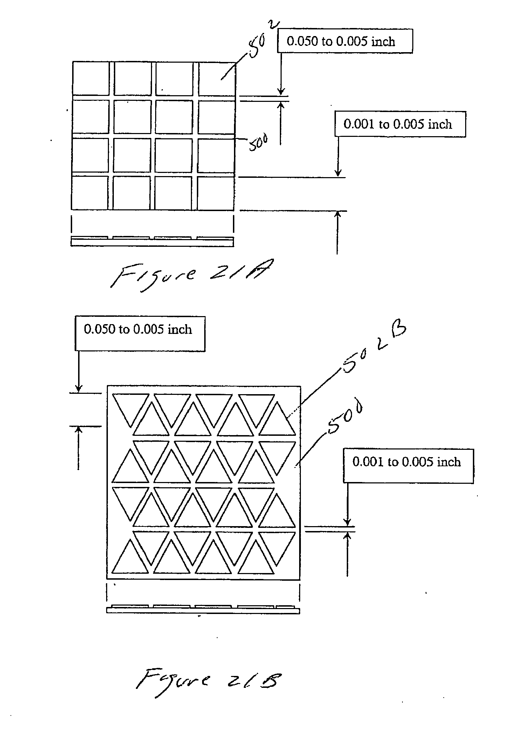

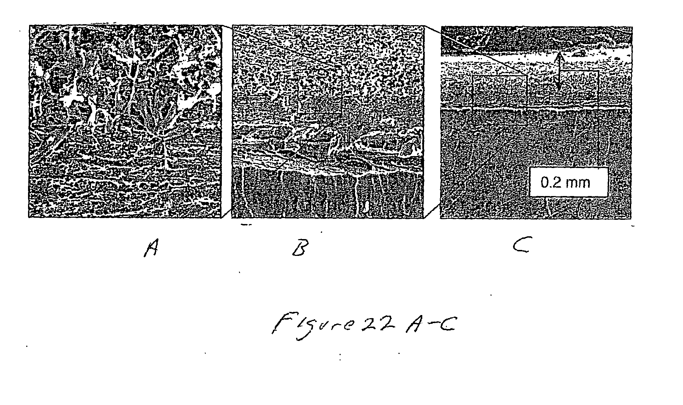

One may use a holder for the slide according to the present invention that allows one to hold the slide during processing (such as washing or spotting and during imaging. Figures 11 and 12 show one such holder. This holder 400 is in the form of a "clamshell" having a top cover 402 and bottom cover 404 connected by a flexible or living hinge 406. Preferably it is made of a vacuum formed plastic for low cost and rapid manufacture. The top cover 402 has a window or opening 408 which corresponds in size and shape to the membrane panel 410 on the slide 412. In this way one has free access to the membrane surface as needed while keeping the slide off the work surface. Other holder embodiments (not shown) can also be used. For example one can form a slide holder of two pieces of material that snap together or are held together by adhesive, clamps or Velcro® fasteners.

A further embodiment shown in Figure 13 consists of a textured and faceted surface 420 on one side of the slide 422, to which the membrane 424 is attached. A three-dimensional-texture surface absorbs more UV light, internally refracts more UV light, and externally reflects UV light and fluorescent light in a diffused manner as shown by the arrows 426. Overall, this textured surface reduces the amount of fluorescent light that reaches the CCD or equivalent imaging sensor 428, which improves background-fluorescence performance.

The slide surface 420 could also feature flat facets (not shown) that preferentially direct fluorescent frequencies of light away from the CCD sensors that are used for image capture. The angle of incidence between the axis of the fluorescent light and the facets should be between 45 degrees and 89 degrees. The upper-bound limit of 89 degrees would be limited by the draft angle needed to molding the features, and safely extract parts form a mold.

Table 1 shows that the projected fluorescence from a slide surface changes as the angle of the slide's surface changes. If a multi-faceted surface were molded, machined or formed into the top surface of the slide the background fluorescence could be reduced. This remains true even if 5 percent of the original slide surface cannot be rotated due to rounded edges that are characteristic of typical molding or fabrication capabilities.

| Table 1 | | |
|---|---|---|
| Angle of Facets | Estimated Fluorescence projected back to CCD sensor. Assume a knife edge can be formed. | Corrected for potential molding defects, which prevent the formation of a knife-edge. Assume 5% of original surface remains flat. |
| (Degrees) | Percent (%) | Percent (%) |
| 0 | 100% | 100% |
| 10 | 98% | 99% |
| 20 | 94% | 94% |
| 30 | 87% | 87% |
| 40 | 77% | 78% |
| 45 | 71% | 72% |
| 50 | 64% | 66% |
| 60 | 50% | 53% |
| 70 | 34% | 38% |
| 80 | 17% | 22% |
| 90 | 0% | 5% |
| | | |

While Figure 13 shows facets with onside having an angle that is vertical while the other is less than vertical and merges into the vertical facet face at its upper limit, other facet designs can be used, including but not limited to pyramidal shapes.

Another embodiment uses a neoprene slide material or a neoprene-coated slide that has membrane already attached to it. As shown in Figure 14, the neoprene or equivalent material 430 covers the top surface of the entire slide 432 except for a window 434, which exposes the membrane 436. The size of the window may be 20mm x 50mm, but could be larger or smaller. The neoprene coating is attached to the slide by mechanical means such as clamps, adhesive means such as double sided adhesive tape or glues or it can be solvent bonded to the slide surface. Alternatively it can be cast in place. The slide material can be any of those described above such as glass, aluminum, polymer, ceramic, or a composite of the afore-mentioned materials. The membrane material can be a PVDF such as Immobilon™-FL membrane or equivalent. The membrane can also be a nitrocellulose or nylon. The membrane can also be composite membrane that has one or more sub-layers within the membrane, which contain a higher concentration of carbon-graphite, dye or pigment. The top layer of the membrane would preferably predominately consist of a PVDF membrane such as Immobilon™-FL membrane, which has high protein binding performance and relatively low background fluorescence.

This novel slide concept provides a protein-array slide that significantly improves the current level of performance for protein-array slides. The benefits of this design include:
1) a neoprene or equivalent coating that has very low background fluorescence at wavelengths between 450nm and 700nm, when excited at the UV wavelengths of light such as 200nm to 500nm;
2) a coating that covers the exposed surface of glass slides, which may produce undesirable amounts of background fluorescence;
3) a coating that covers the exposed edges of a membrane, which produce undesirable amounts of background fluorescence;
4) a coating that covers the exposed adhesive material at the edges of a membrane which also produces undesirable amounts of background fluorescence;
5) a coating that covers over the edges of an attached membrane and mechanically attaches membrane to a slide material, thus preventing solvents, aqueous solutions or reagents from seeping through the membrane and compromising the membrane's attachment;
6) a neoprene or equivalent coating that has very low protein-binding qualities, which minimize the attachment and subsequent loss of expensive antibody reagents.

The neoprene or equivalent (carbon or carbon filled silicone rubber for example) coating may be applied using different processes, such as: pad printing, over-molding, laminating, or spraying.

The raised edge of the coating also acts as a quasi-O-ring seal, which improves the overall fluid seal performance of this product in any standard array washer, which could be manually operated or automatically operated.

An additional embodiment shown in Figures 15 and 16 consists of one or more slides 450 attached to a CD-type disk 452. One embodiment consists of placing a standard slide into a suitably-configured-CD disk 452. The slides 450 would snap into place and be fixed to the CD 452 during application of antibody reagents, blocking, and washing by a series of retainers 454. The application of fluid reagents would be done using a spin-coating process. To ensure a stream-lined fluid flow, the plane of the membrane should be in the same plane as the wetted surface of the CD disk 452. In addition, any gaps between the slides 450 and the CD frame 452 would have to be minimized.

Alternatively as shown in Figure 16, a CD 460 can be formed with the slide format 462 already formed therein. A membrane 464 is then attached to each slide format 462 on the CD holder 460. Additionally, injection molding a CD 460 that has breakaway features 466 that enable slides to be easily extracted for analysis and storage in a customer's traditional format can be used.

Figure 17 shows an alternative embodiment using arms 470 instead of a disk format of Figure 15 and 16. The arms 470 can be two or more (4 shown) and should be arranged equidistant from each other to maintain proper balance during use. The slides 472 are releasably mounted to the arms by mechanical means such as are shown and discussed above or they can be molded into the arms and have the membrane 474 attached them as discussed above.

The key advantages of these formats (Figures 15-17) are that: a) spin-coating techniques can be applied to attach antibody reagents to the target surface; b) spin-coating methods have been developed, and proven to be effective in the microchip-manufacturing industry; c) spin-coating would allow smaller quantities of very expensive reagents to be used, compared to current slide-handling methods; d) reagents could be aerosolized using ultrasonic vibration methods, and uniformly applied by this method; e) washing of protein-bound and blocked surfaces can be improved by more effectively distributing fluids using centrifically-driven flow compared to pressure driven fluid flow or electro-osmotic-driven fluid flow; and f) spin drying can shorted overall processing times.

An accessory product for this device would include the integration of an aerosolization (nebulizer) system into a CD-drive chassis that includes UV excitation and fluorescent detection. These are all off-the shelf technologies that can be pre-positioned and integrated into an automated wash and imaging system.

Additional embodiment shown in Figure 18 consists of an open-bottom slide 480 having the open portion 482 of the slide temporarily filled with a secondary material 484 that supports the suspended membrane 486 from below during spotting operations. This secondary material can be fixed in place initially, and during pre-wash and spotting operations. The secondary material would be manually removed after spotting and prior to washing operations. This secondary material can be die-cut or injection molded from the same material as the slide, or could be made from a different material that has low extractable qualities when immersed in aqueous solutions and methanol-type solvents. The candidate materials include polymers such as elastomers, polyolefin, polystyrene, acrylic, and polyesters or metals especially ferro-magnetic materials when the slide is made of a magnetic material or contains a magnetic filler or coating. Such ferro-magnetic materials can be metals such as steel, iron, nickel and the like or they can be polymers that contain ferro-magnetic particles.

A secondary material made of ferro-magnetic material would enable the support to be attached to a slide using magnetic forces instead of mechanical press fit or a temporary-adhesive system.

The secondary material 484 can be coated with a temporary adhesive system, such as an acrylate-type tape. This tape may consist of a polyester film coated on one side with an adhesive, or a polyester film coated on both sides with an adhesive. This approach would enable the support to be attached to an open-bottom slide in such a way that the secondary material bonds to the slide edges and is easily peeled away and discarded in an environmentally responsive way after use. Alternatively, other attachment devices such as hook/loop attachment system (such as a Velcro® tape) can be used.

Figure 19 shows another embodiment of the present invention in which the one or more openings in the slide 490 are one or more small drain holes 492 formed adjacent to the membrane(s) 494 or in one or more of the corners or other edges of the membrane(s) to allow for excess liquid to drain from the slide surface especially when subjected to a vacuum from beneath the slide. Such holes can be molded into the plastic slide or can be formed by drilling or laser cutting in a plastic or glass slide.

Figures 20 A and B show different embodiments of a slide 500 with one or more membranes 502 that contain a large amount of individual membrane portions similar to what can be found on some photolithographic semiconductor-like microarray devices. The individual sections are preferably formed by laser cutting. They may if desired have drain holes (not shown) under some or all of the membranes sections or adjacent to the outer rows or columns of the membranes 502 if desired. Figure 21 a shows a close up of a section of those membranes 502 with the typical dimensions of the membrane sections (from about 0.050 to about 0.005 inch) and the cutaway sections (from about 0.001 to about 0.005 inch) shown.

Figure 21 B shows a similar close up but in this embodiment the membrane 502B has been cut into triangular pieces and their typical dimensions noted.

### Example 1

A carbon filled polystyrene slide support was formed in the same configuration as a conventional glass microscope slide. One opening centrally located in the support was formed of a size having a length of 46 (mm) and a width of 18 (mm). A PVDF asymmetric membrane, Immobilon^{™} FL membrane available from Millipore Corporation of Billerica, Massachusetts was solvent bonded to the slide with acetone. The acetone was applied to the edges of the smaller pored side of the membrane and allowed to wick into the membrane for 1 second. The solvent was allowed to evaporate for 3 seconds and then the smaller pored side of the membrane was pressed against the desired major surface of the slide over the opening using a one eighth inch thick silicone elastomer sheet to distribute the clamping load as evenly as possible across the sheet. Figure 22 A-C show a series of SEMs of the example.

## Claims

1. A protein microarray slide comprising a slide having a first and a second major surface and the slide having one or more openings therethrough from the first major surface to the second major surface and one or more membranes attached to a major surface of the slide selected from the group consisting of the first major surface and the second major surface over the one or more openings.

2. The slide of claim 1 wherein
a) the number of openings is one and the number of membranes is one, or
b) the number of openings is more than one and the number of membranes is one, or
c) the number of openings and the number of membranes are both more than one, or
d) the number of openings and the number of membranes are both more than one and the number of openings is equal to the number of membranes.

3. The slide of claim 1 wherein
a) the slide is made of a material selected from the group consisting of glass, ceramic, metal and plastic, or.
b) the slide is made of plastic selected from the group consisting of polyethylene, polypropylene, polystyrene, polycarbonate, ABS, nylon, acrylic resin and polysulfone, or
c) the slide is made of plastic and contains one or more fluorescent blocking or absorbing materials, or
d) the slide is made of plastic and contains one or more fluorescent blocking or absorbing materials selected from the group consisting of carbon black, charcoal, activated carbon and graphite, or
e) the slide is made of plastic and has at least the first and second major surfaces coated with a layer containing one or more fluorescent blocking or absorbing materials.

4. The slide of claim 1 wherein
a) the slide has one opening, or
b) the slide has one opening and the opening is centrally located in the major surfaces of the slide, or
c) the slide has two or more openings in a form selected from the group consisting of a grid, a screen, a series of lanes, a series of holes and mixtures thereof.

5. The slide of claim 1 wherein
a) the membrane is made of a material selected from the group consisting of PVDF, nitrocellulose and nylon, or
b) the membrane is asymmetric in pore size across its thickness and the membrane is arranged on the slide such that the more open pored side is facing away from the major surface to which the membrane is attached, or
c) the membrane is an asymmetric PVDF membrane and the membrane is arranged on the slide such that the more open pored side is facing away from the major surface to which the membrane is attached.

6. The slide of claim 1 wherein
a) the slide is made of plastic, contains one opening, the membrane is an asymmetric PVDF membrane and the membrane is arranged on the slide such that the more open pored side is facing away from the major surface to which the membrane is attached, or
b) the slide is made of plastic, contains one opening, the membrane is an asymmetric PVDF membrane, the membrane is arranged on the slide such that the more open pored side is facing away from the major surface to which the membrane is attached and the slide contains one or more fluorescent blocking or absorbing materials.

7. The slide of claim 1 wherein
a) the membrane is attached to the surface of the slide by a mechanism selected from the group consisting of an adhesive, a double sided adhesive tape and solvent bonding, or
b) the membrane is attached to the surface of the slide by solvent bonding.

8. A holder for a slide according to claim 1 wherein the holder is comprised of a top cover, a bottom cover, the top cover and bottom cover being of a size and configuration to substantially cover the slide and wherein at least either the top cover or bottom cover has one or more windows corresponding to and in register with the membrane(s) of the slide.

9. The holder of claim 8,
a) wherein both the cover and bottom cover have one or more openings corresponding to and in register with the one or more openings of the slide, or
b) further comprising the top cover and bottom cover are attached to each other by a hinge, or
c) further comprising the top cover and bottom cover are attached to each other by a hinge and wherein the hinge is formed as part of a continuous piece including the top cover and bottom cover, or
d) wherein the holder is a clam shell design.

10. The holder of claim 8 wherein
a) the holder is a clam shell design and is formed of a plastic, or
b) the holder is a clam shell design, is formed of a plastic and contains one or more locking mechanisms on the facing surfaces of the cover and bottom cover, or
c) the holder is a single piece having a flexible hinge located between the cover and bottom cover, the holder is formed of plastic and the holder contains one or more locking mechanisms formed on the facing surfaces of the cover and bottom cover, or
d) the holder is a single piece having a flexible hinge connecting the cover to the bottom cover, the holder is formed of plastic and the holder contains one or more locking mechanisms formed on outer edges of the facing surfaces of the cover and bottom cover, or
e) the cover and bottom cover are formed of a plastic containing one or more fluorescent blocking or absorbing materials, or
f) the cover and bottom cover are formed of a plastic having a layer of one or more fluorescent blocking or absorbing materials on at least its first and second major surfaces.
